# EUROPÄISCHE PATENTANMELDUNG

(11) **EP 1 088 736 A2**
(43) Veröffentlichungstag der Anmeldung: **04.04.2001**
(21) Anmeldenummer: 00121596.1
(22) Anmeldetag: 02.10.2000
(51) Int. Cl.: B62B 3/14

(54) **Display für Einkaufswagen, Gepäckkarren oder ähnliche Fahrzeuge**

(30) Priorität: 02.10.1999 DE 29917420 U; 05.05.2000 DE 20008171 U
(71) Anmelder: Zeh, Harry, 37581 Bad Gandersheim (DE)
(72) Erfinder: Zeh, Harry, 37581 Bad Gandersheim (DE)
(74) Vertreter: Schlimme, Wolfram, Dr.-Ing.

(57) **Zusammenfassung**

Ein Display für Einkaufswagen, Gepäckkarren oder ähnliche Fahrzeuge umfaßt ein Gehäuse (3), einen flexiblen, auf- und abrollbaren Informationsträger (2), einen im Gehäuse (3) vorgesehenen Aufrollmechanismus mit einer Wickelspule, an der ein erstes Ende des Informationsträgers (2) befestigbar ist, wobei am anderen Ende des Informationsträgers (2) ein Griffstück (1) vorgesehen ist, so daß der Informationsträger (2) aus dem Gehäuse (3) herausziehbar und dabei abrollbar ist. Weiterhin ist der Aufrollmechanismus so ausgebildet, daß er den von einer Bedienperson abgerollten, aus dem Gehäuse (3) herausgezogenen Informationsträger (2) automatisch wieder aufrollt und in das Gehäuse (3) hineinzieht, wenn die Bedienperson den Informationsträger (2) freigibt.

## Beschreibung

Die Erfindung betrifft ein ausrollbares Display für Einkaufswagen, Gepäckkarren oder ähnliche Fahrzeuge.

Häufig besteht bei einem Kunden während eines Einkaufs das Bedürfnis, Informationen über aktuelle Sonderangebote des Marktes, in dem sich der Kunde befindet, in einer Weise zur Verfügung zu haben, wie dies beispielsweise in Zeitungsanzeigen oder Flugblättern des Marktes üblich ist. Zwar ist es bekannt, Werbetafeln an den Seitenwänden eines Einkaufskorbs oder eines Einkaufswagens anzubringen, doch sind diese entweder zu weit von dem den Wagen schiebenden Betrachter entfernt oder sind bei einem bereits beladenen Wagen nicht mehr sichtbar.

Des weiteren besteht bei einem Reisenden, der einen Gepäckkarren oder Gepäckwagen schiebt, beispielsweise an Bahnhöfen oder Flughäfen, häufig das Bedürfnis, einen Lageplan des Bahnhofs oder des Flughafens schnell zur Verfügung zu haben, um sich auf dem Gelände des Bahnhofs oder des Flughafens orientieren zu können.

Aufgabe der vorliegenden Erfindung ist es, ein gattungsgemäßes Display für Einkaufswagen, Gepäckkarren oder ähnliche Fahrzeuge anzugeben, mittels welchem Information schnell zur Verfügung gestellt werden kann, ohne daß dieses Display bei der Benutzung des Einkaufswagens, Gepäckkarrens oder ähnlichen Fahrzeugs hinderlich ist.

Diese Aufgabe wird gemäß Anspruch 1 erfindungsgemäß gelöst von einem Display für Einkaufswagen, Gepäckkarren oder ähnliche Fahrzeuge mit einem Gehäuse, einem flexiblen, auf- und abrollbaren Informationsträger, einem im Gehäuse vorgesehenen Aufrollmechanismus mit einer Wickelspule, an der ein erstes Ende des Informationsträgers befestigbar ist, wobei am anderen Ende des Informationsträgers ein Griffstück vorgesehen ist, so daß der Informationsträger aus dem Gehäuse herausziehbar und dabei abrollbar ist, und wobei der Aufrollmechanismus so ausgebildet ist, daß er den von einer Bedienperson abgerollten, aus dem Gehäuse herausgezogenen Informationsträger automatisch wieder aufrollt und in das Gehäuse hineinzieht, wenn die Bedienperson den Informationsträger freigibt. Durch die automatische Aufwicklung ist der Informationsträger geschützt und steht trotzdem dem Benutzer jederzeit zur Verfügung.

Dieses erfindungsgemäße Display ermöglicht es, verkaufsförderndes Werbematerial oder andere Information genau dort zu plazieren, wo es dem Kunden beziehungsweise dem Benutzer des Einkaufswagens, Gepäckkarrens oder ähnlichen Fahrzeugs während der gesamten Benutzungsdauer zur Verfügung steht, ohne in irgendeiner Weise im Weg zu sein. Mittels dieses Displays kann sich ein Kunde in einem Markt somit schnell über Sonderangebote oder auch über die Lage einzelner Abteilungen in einem Großmarkt ebenso informieren wie ein Reisender in einem Bahnhof oder einem Flughafen über die Topographie des Bahnhofs beziehungsweise des Flughafens.

Vorzugsweise ist der Informationsträger von einer zumindest einseitig transparenten Hülle gebildet, in die ein Informationsblatt einschiebbar ist. Diese transparente Hülle gestattet den schnellen Austausch von Informationsblättern, beispielsweise von Sonderangebots-Anzeigen. Vorzugsweise ist das Gehäuse mit Halterungen zur Befestigung des Displays an einem Einkaufswagen, Gepäckkarren oder ähnlichen Fahrzeug versehen. Diese Halterungen gestatten die schnelle und kostengünstige Ausstattung von bereits vorhandenen Einkaufswagen, Gepäckkarren oder ähnlichen Fahrzeugen mit dem Display.

In einer besonders bevorzugten Ausführungsform ist das Gehäuse in einen Schubgriff eines Einkaufswagens, Gepäckkarrens oder ähnlichen Fahrzeugs integriert oder integrierbar. Diese integrierte Lösung der Anbringung des Displays ist eine besonders platzsparende Variante, die bevorzugt bei bereits herstellerseitig mit dem Display ausgestatteten Einkaufswagen, Gepäckkarren oder ähnlichen Fahrzeugen gewählt wird.

Vorzugsweise weist der Aufrollmechanismus einen die Wickelspule beaufschlagenden Federmotor auf, der beim Herausziehen des Informationsträgers aufgezogen wird und dessen Federkraft das Wiederaufwickeln des Informationsträgers bewirkt. Diese einfache Lösung eines automatischen Aufrollmechanismus' ist besonders kostengünstig und betriebssicher.

Vorzugsweise weist dabei der Aufrollmechanismus eine Sperrklinkenkupplung nach Art eines Springrollos auf. Hierdurch kann der herausgezogene Informationsträger in der herausgezogenen Position verbleiben, ohne daß der Benutzer den Informationsträger ständig festhalten muß. Erst wenn der Benutzer den Informationsträger nicht mehr benötigt, wird die Sperrklinkenkupplung durch kurzes Herausziehen des Informationsträgers gelöst und der Informationsträger wird vom Aufrollmechanismus in das Gehäuse zurückgezogen.

Die Erfindung wird nachfolgend anhand eines Beispiels unter Bezugnahme auf die Zeichnung näher erläutert; in dieser zeigt:
- **Fig. 1.**: eine Frontansicht des erfindungsgemäßen Displays mit herausgezogenem Informationsträger,
- **Fig. 2.**: eine Seitenansicht gemäß Pfeil II in Fig. 1,
- **Fig. 3.**: eine Frontansicht des Displays mit eingezogenem Informationsträger und
- **Fig. 4.**: eine Frontansicht einer alternativen Ausführungsform des Displays, bei dem das Gehäuse in die Schubstange eines Einkaufswagens, Gepäckkarrens oder ähnlichen Fahrzeugs integriert ist.

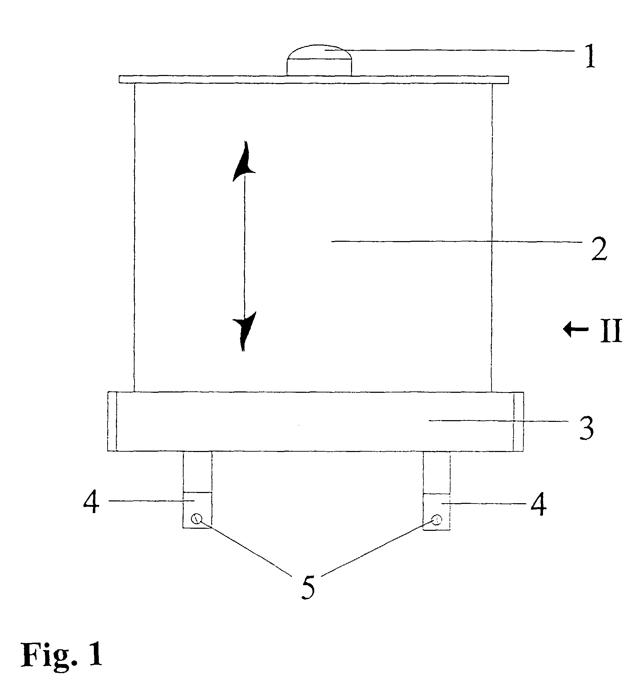

In Fig. 1 ist eine erste Ausführungsform des erfindungsgemäßen Displays gezeigt. Das Display umfaßt ein Gehäuse 3, in dem ein nicht näher dargestellter automatischer Aufrollmechanismus für einen durch einen Längsschlitz des Gehäuses 3 herausgeführten flächigen Informationsträger 2 vorgesehen ist. Der Informationsträger 2 ist auf an sich bekannte Weise mit seiner unteren Endkante an einer Welle des Aufwickelmechanismus' befestigt.

An seiner oberen, aus dem Gehäuse 3 herausragenden Endkante ist der Informationsträger mit einem die Endkante verstärkenden Griffstück 1 versehen, welches seitlich über die Seitenkanten des Informationsträgers 2 hinausragt, um so einen Anschlag zu bilden, der vermeidet, daß der Informationsträger 2 vollständig in das Gehäuse 3 zurückgezogen wird.

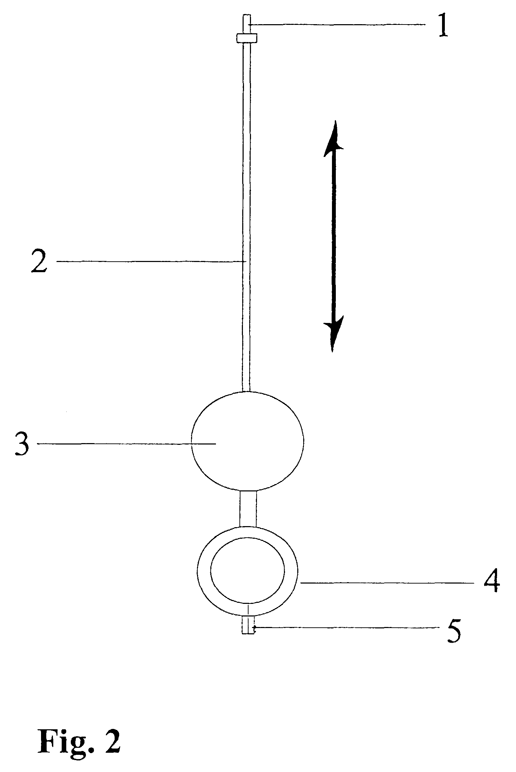

Der in den Fig. 1 und 2 in seiner herausgezogenen Stellung gezeigte Informationsträger wird von dem Aufwickelmechanismus im Gehäuse 3 in das Gehäuse 3 hineingezogen und kann am Griffstück 1 gegen die Kraft des Aufwickelmechanismus' herausgezogen werden, was durch den Doppelpfeil in Fig. 1, 2 und Fig. 4 symbolisiert ist.

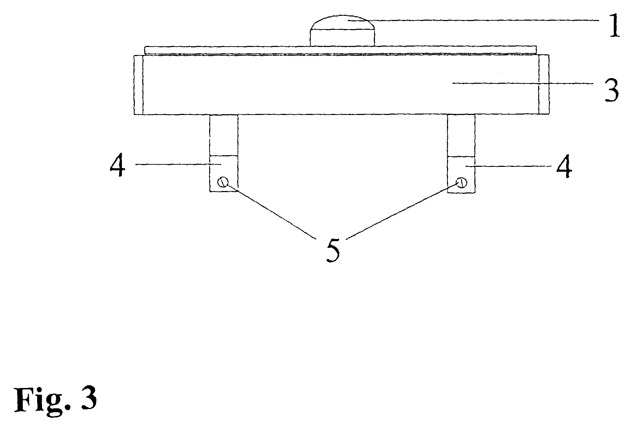

In Fig. 3 ist zu erkennen, daß das Griffstück 1 im eingezogenen Zustand des Informationsträgers ein vollständiges Hineinziehen des Informationsträgers in das Gehäuse 3 durch Anschlag am Gehäuse 3 verhindert.

Am Gehäuse 3 sind zwei Haltelaschen 4 angebracht, die der Befestigung an einem Einkaufswagen, Gepäckkarren oder ähnlichen Fahrzeug dienen. Die Haltelaschen 4 sind jeweils als kreisringförmige, geschlitzte Schellen ausgebildet, die im Bereich ihres Trennschlitzes mit Flanschabschnitten versehen sind, durch die eine Verschraubungsvorrichtung 5 hindurchgeführt ist. Mittels dieser Haltelaschen oder Halterungen 4 kann das Display am Griffstück eines Einkaufswagens, Gepäckkarrens oder sonstigen Fahrzeugs befestigt werden, wobei die Haltelaschen das Griffstück umgreifen und daran klemmend im Reibschluß befestigt werden.

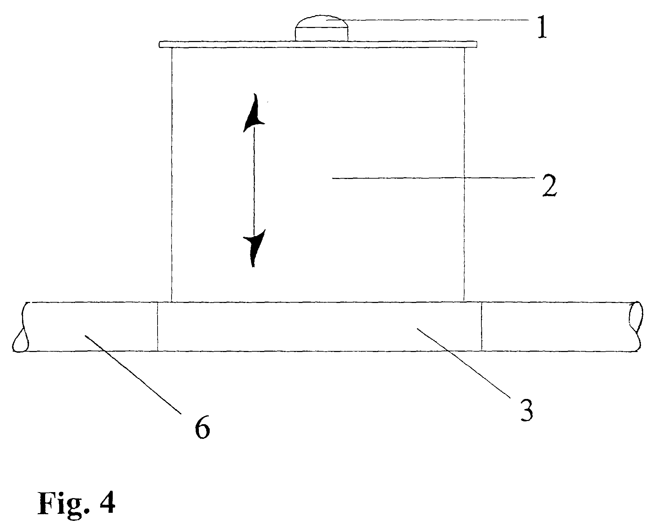

In Fig. 4 ist eine alternative Ausführungsform des Displays mit herausgezogenem Informationsträger 2 gezeigt, bei welchem das Gehäuse 3 in den Schubgriff 6 eines Einkaufswagens koaxial integriert ist, wobei der Durchmesser des Gehäuses 3 im wesentlichen dem Durchmesser des Schubgriffs 6 entspricht.

Die Erfindung ist nicht auf das obige Ausführungsbeispiel beschränkt, das lediglich der allgemeinen Erläuterung des Kerngedankens der Erfindung dient. Im Rahmen des Schutzumfangs kann die erfindungsgemäße Vorrichtung vielmehr auch andere als die oben beschriebenen Ausgestaltungsformen annehmen. Die Vorrichtung kann hierbei insbesondere Merkmale aufweisen, die eine Kombination aus den jeweiligen Einzelmerkmalen der Ansprüche darstellen.

Bezugszeichen in den Ansprüchen, der Beschreibung und den Zeichnungen dienen lediglich dem besseren Verständnis der Erfindung und sollen den Schutzumfang nicht einschränken.

### Bezugszeichenliste

- 1: Griffstück
- 2: Informationsträger
- 3: Gehäuse
- 4: Halterung
- 5: Verschraubungsvorrichtung
- 6: Schubgriff

## Patentansprüche

1. Display für Einkaufswagen, Gepäckkarren oder ähnliche Fahrzeuge, mit
einem Gehäuse (3),
einem flexiblen, auf- und abrollbaren Informationsträger (2), einem im Gehäuse (3) vorgesehenen Aufrollmechanismus mit einer Wickelspule, an der ein erstes Ende des Informationsträgers (2) befestigbar ist,
wobei am anderen Ende des Informationsträgers ein Griffstück (1) vorgesehen ist, so daß der Informationsträger (2) aus dem Gehäuse (3) herausziehbar und dabei abrollbar ist, und
wobei der Aufrollmechanismus so ausgebildet ist, daß er den von einer Bedienperson abgerollten, aus dem Gehäuse (3) herausgezogenen Informationsträger (2) automatisch wieder aufrollt und in das Gehäuse (3) hineinzieht, wenn die Bedienperson den Informationsträger (2) freigibt.

2. Display nach Anspruch 1,
dadurch **gekennzeichnet,**
daß der Informationsträger (2) von einer zumindest einseitig transparenten Hülle gebildet ist, in die ein Informationsblatt einschiebbar ist.

3. Display nach Anspruch 1 oder 2,
dadurch **gekennzeichnet,**
daß das Gehäuse (3) mit Halterungen (4) zur Befestigung des Displays an einem Einkaufswagen, Gepäckkarren oder ähnlichen Fahrzeug versehen ist.

4. Display nach Anspruch 1 oder 2,
dadurch **gekennzeichnet,**
daß das Gehäuse (3) in einen Schubgriff (6) eines Einkaufswagens, Gepäckkarrens oder ähnlichen Fahrzeugs integriert oder integrierbar ist.

5. Display nach einem der vorhandenen Ansprüche,
dadurch **gekennzeichnet,**
daß der Aufrollmechanismus einen die Wickelspule beaufschlagenden Federmotor aufweist, der beim Herausziehen des Informationsträgers (2) aufgezogen wird und dessen Federkraft das Wiederaufwickeln des Informationsträgers (2) bewirkt.

6. Display nach Anspruch 5,
dadurch **gekennzeichnet,**
daß der Aufrollmechanismus eine Sperrklinkenkupplung nach Art eines Springrollos aufweist.
